# EUROPEAN PATENT APPLICATION

(11) **EP 4 319 367 A1**
(43) Date of publication of application: **07.02.2024**
(21) Application number: 21933011.5
(22) Date of filing: 24.03.2021
(51) Int. Cl.: H04W 72/04

(54) **TERMINAL AND RADIO BASE STATION**

(71) Applicant: NTT DOCOMO, INC., Tokyo 100-6150 (JP)
(72) Inventor: ECHIGO Haruhi, Tokyo 100-6150 (JP); HARADA Hiroki, Tokyo 100-6150 (JP); KURITA Daisuke, Tokyo 100-6150 (JP)
(74) Representative: Hoffmann Eitle
(86) International application number: PCT/JP2021/012416
(87) International publication number: WO 2022/201401

(57) **Abstract**

A terminal repeatedly transmits an uplink channel and controls transmission of the uplink channel in a specified period of more than one slot. The terminal causes hopping the uplink channel in the frequency direction in units of the specified period.

## Description

### [Technical Field]

This disclosure relates to a terminal and a radio base station that support coverage enhancement.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

For example, in 3GPP Release-17, it was agreed to consider coverage enhancement (CE) in NR (Non-Patent Literature 1).

### [Citation List]

### [Non-Patent Literature]

Non-Patent Literature 1: "New WID on NR coverage enhancements," RP-202928, 3GPP TSG RAN meeting #90e, 3GPP, December 2020

### [Summary of Invention]

DDDSU (D: Downlink (DL) symbol, S: DL/Uplink (UL) or Guard symbol, U: UL symbol) is specified as a slot configuration pattern for time division duplex (TDD), and if the S slot is 10D+2G+2U, two consecutive symbols (2U) and one slot (14 symbols) in the time direction can be used for UL, that is, multiple consecutive slots can be used for UL.

Therefore, in such a case, channel estimation (which may be called joint channel estimation) of an uplink channel (UL channel) such as PUSCH(Physical Uplink Shared Channel) using a demodulation reference signal (DMRS) that can exist in multiple slots is being considered.

However, when such a joint channel estimation is applied, there is room for improvement in the transmission method of the uplink channel.

Therefore, the following disclosure has been made in view of such a situation and aims to provide a terminal and a radio base station that can more efficiently perform channel estimation of the uplink channel such as PUSCH using DMRS that can exist in multiple slots.

One aspect of the disclosure is a terminal (UE200) including a transmission unit (radio signal transmission and reception unit 210) that transmits an uplink channel repeatedly in a specified period of more than one slot and a control unit (control unit 270) that controls transmission of the uplink channel. The control unit causes hopping the uplink channel in the frequency direction in units of the specified period.

One aspect of the disclosure is a terminal (UE200) including a transmission unit (radio signal transmission and reception unit 210) that repeatedly transmits an uplink channel a specified number of times and a control unit (control unit 270) that controls transmission of the uplink channel. The control unit causes hopping the uplink channel in the frequency direction in units of the specified number of times.

One aspect of the disclosure is a radio base station (gNB100) including a reception unit (radio signal transmission and reception unit 210) that receives an uplink channel that is repeatedly transmitted from a terminal within a specified period and a control unit (control unit 270) that performs channel estimation of the uplink channel allocated to multiple slots using the demodulation reference signal allocated to the multiple slots. The reception unit receives the uplink channel hopped in the frequency direction in units of the specified period.

One aspect of the disclosure is a radio base station (gNB100) including a reception unit (radio signal transmission and reception unit 210) that receives an uplink channel that is repeatedly transmitted from a terminal a specified number of times and a control unit (control unit 270) that performs channel estimation of the uplink channel allocated to multiple slots using a demodulation reference signal allocated to the multiple slots. The reception unit receives the uplink channel hopped in the frequency direction in units of the specified number of times.

### [Brief Description of Drawings]

[Fig. 1]

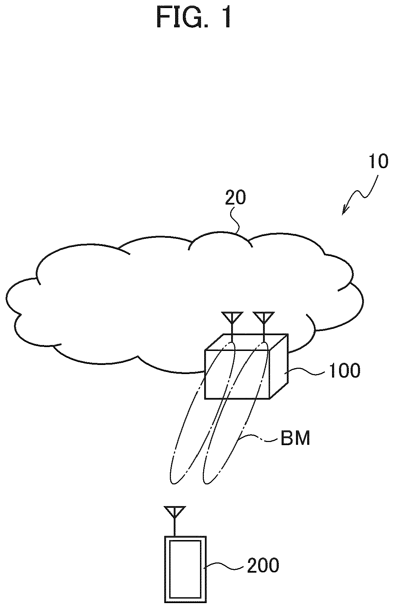

   Fig. 1 is an overall schematic configuration diagram of a radio communication system 10.
[Fig. 2]

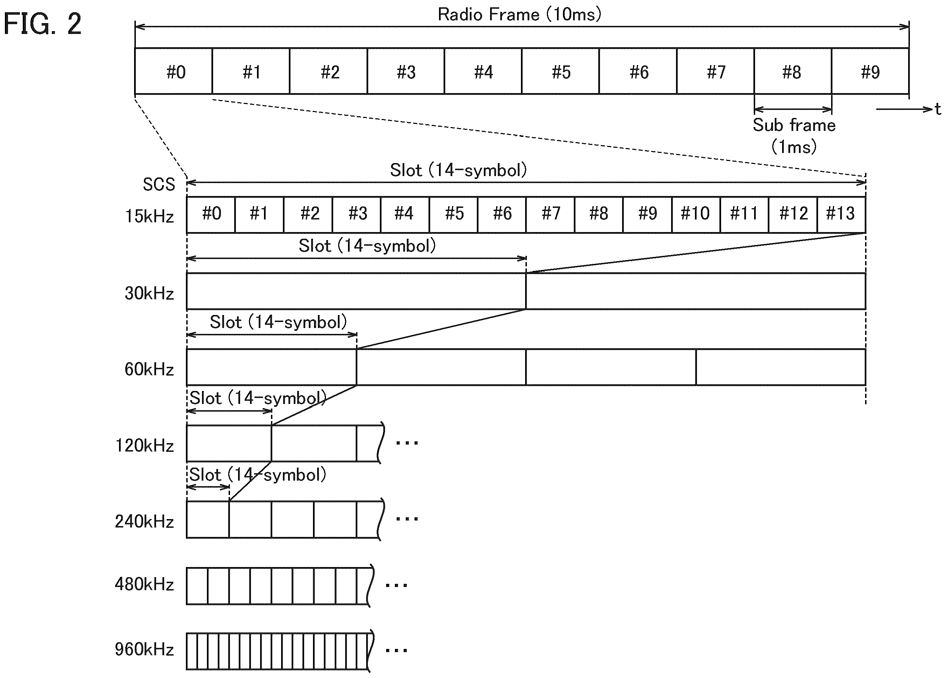

   Fig. 2 is a diagram showing an example configuration of the radio frame, subframe and slot used in radio communication system 10.
[Fig. 3]

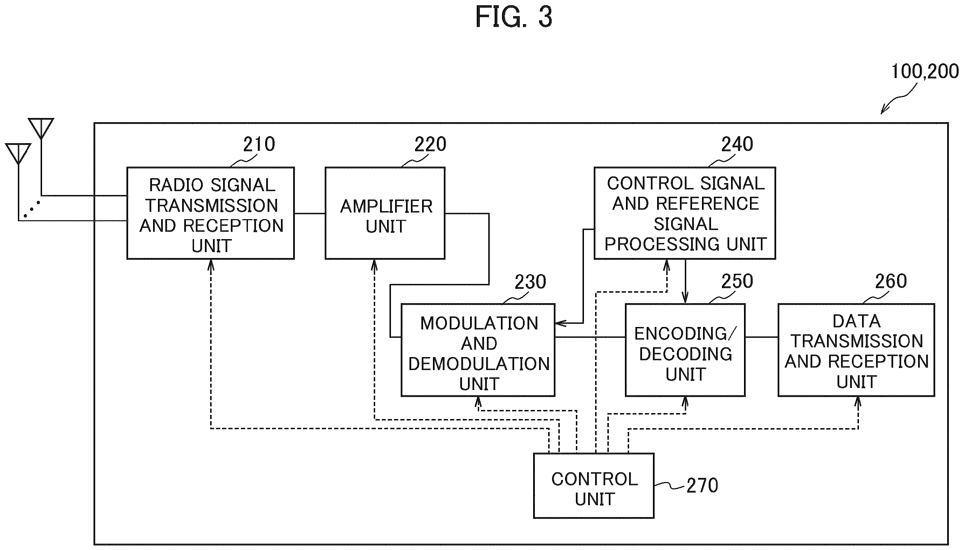

   Fig. 3 is a functional block diagram of gNB100 and UE200.
[Fig. 4]

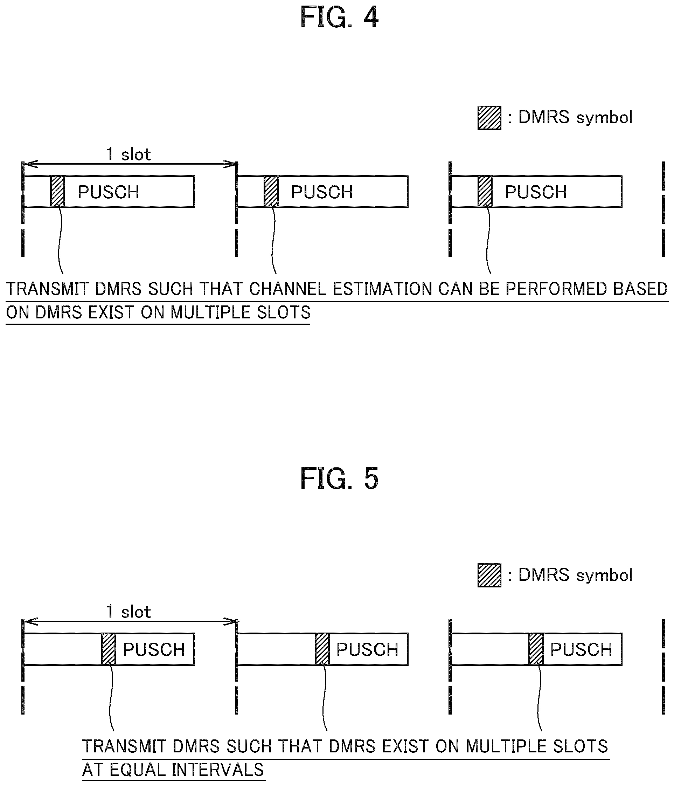

   Fig. 4 shows an example of the arrangement of DMRS used for joint channel estimation (part 1).
[Fig. 5]
   Fig. 5 shows an example of the arrangement of DMRS used for joint channel estimation (part 2).
[Fig. 6]

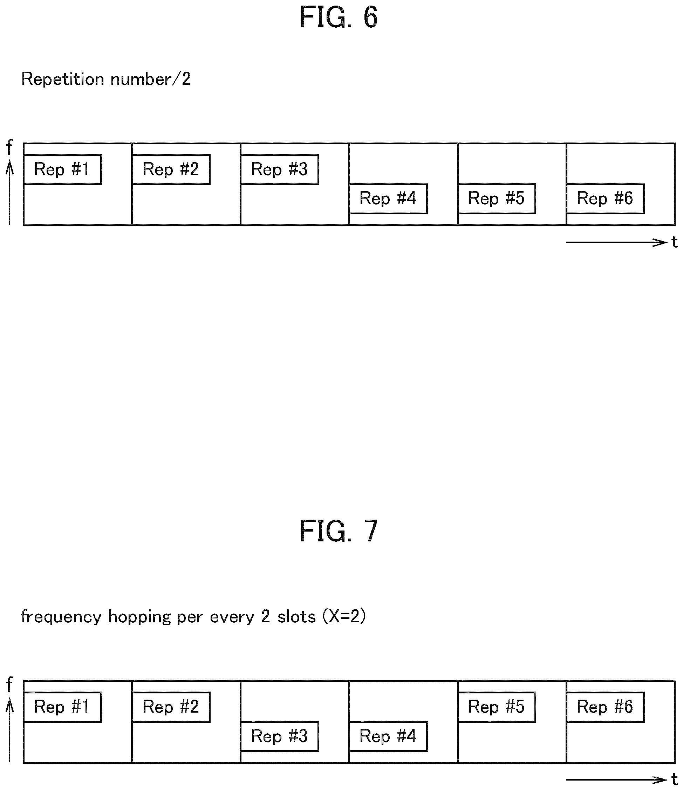

   Fig. 6 is a diagram showing an example of UL channel Repetition in operation example 1-1(Opt 3).
[Fig. 7]
   Fig. 7 is a diagram showing an example of UL channel Repetition in operation example 1-1(Opt 4).
[Fig. 8]

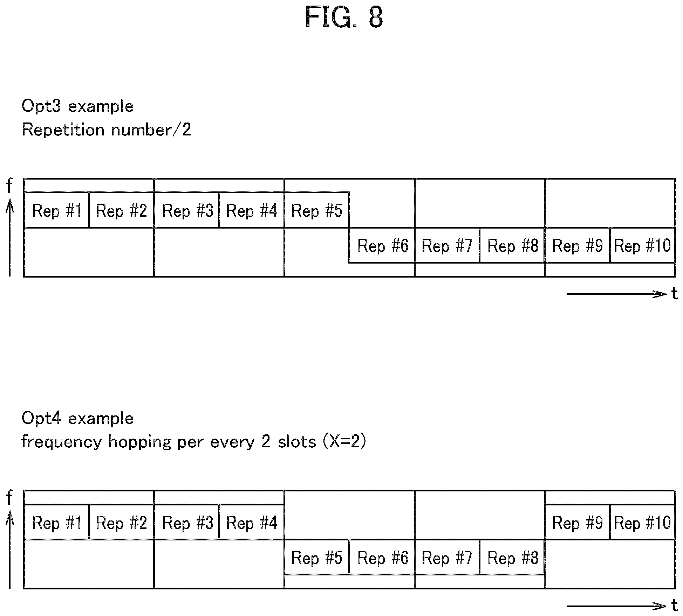

   Fig. 8 is a diagram showing an example of UL channel Repetition in operation example 1-2 (Opt 3, 4).
[Fig. 9]

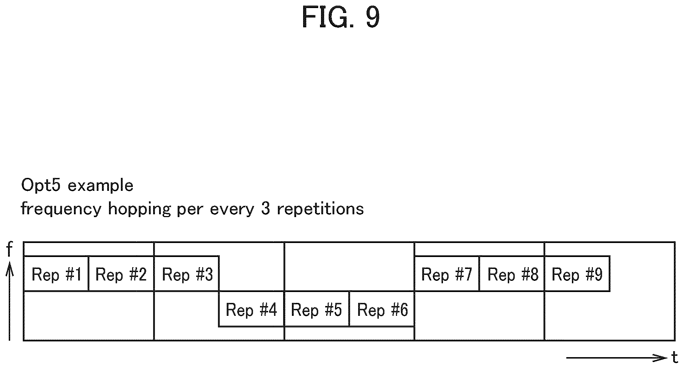

   Fig. 9 is a diagram showing an example of UL channel Repetition in operation example 1-2 (Opt 5).
[Fig. 10]

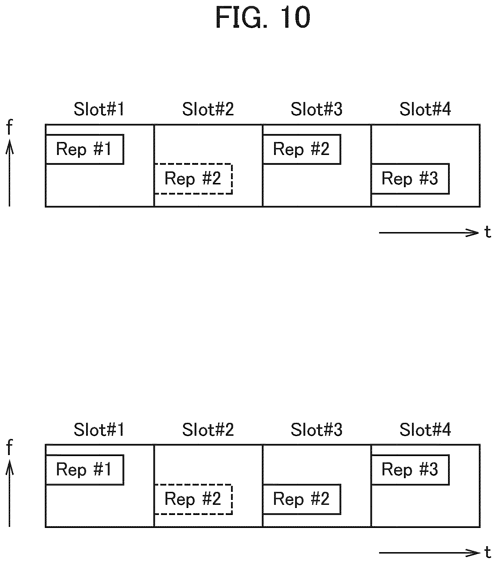

   Fig. 10 is a diagram showing an example of UL channel Repetition in operation example 1-3 (Alt 1, 2).
[Fig. 11]

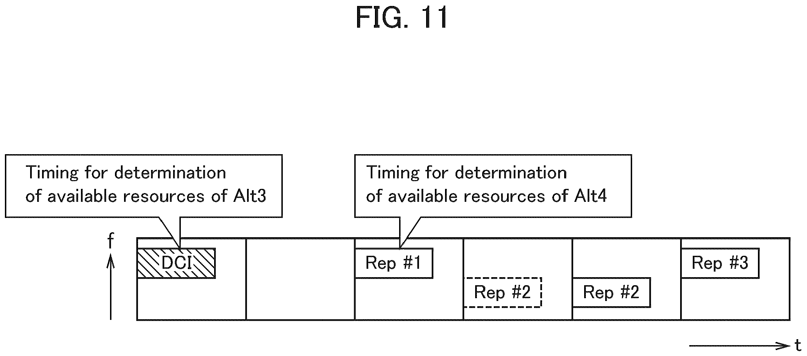

   Fig. 11 is a diagram showing an example of UL channel Repetition in operation example 1-3 (Alt 3, 4).
[Fig. 12]

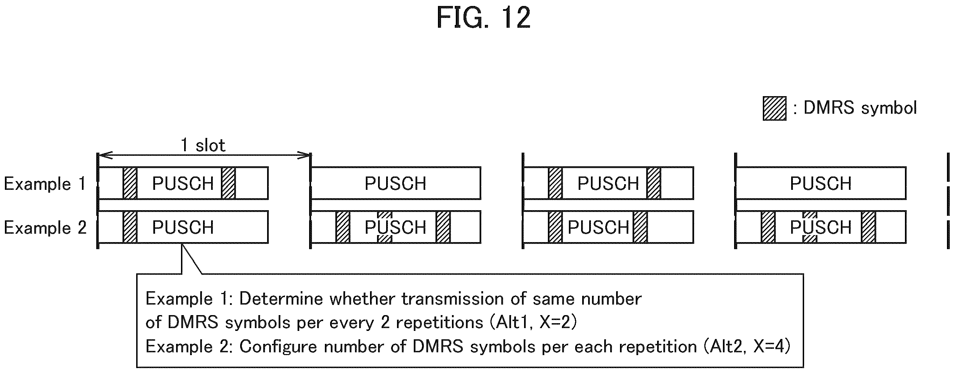

   Fig. 12 is a diagram showing an example (part 1) of the arrangement of PUSCH DMRS used for joint channel estimation for operation example 2-1 (Alt 1, 2).
[Fig. 13]

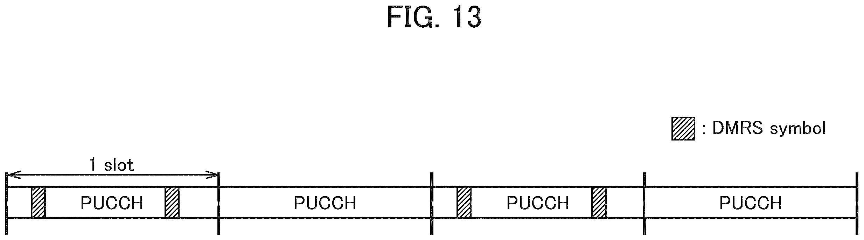

   Fig. 13 is a diagram showing an example of the arrangement of the PUCCH DMRS used for joint channel estimation for operation example 2-1(Alt 1).
[Fig. 14]

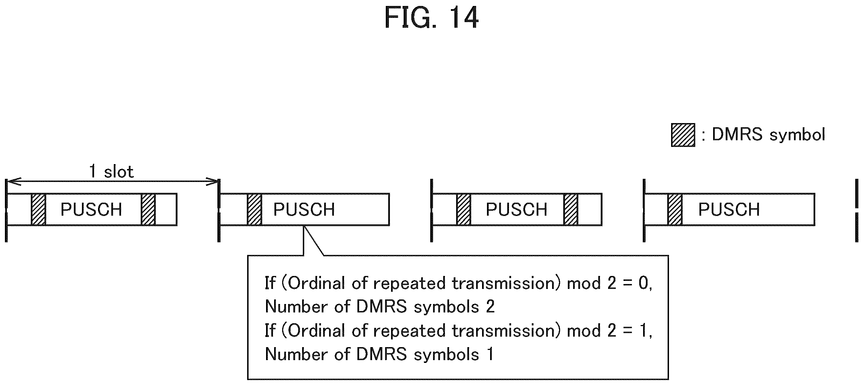

   Fig. 14 is a diagram showing an arrangement example (part 2) of PUSCH DMRS used for joint channel estimation for operation example 2-1(Alt 2).
[Fig. 15]

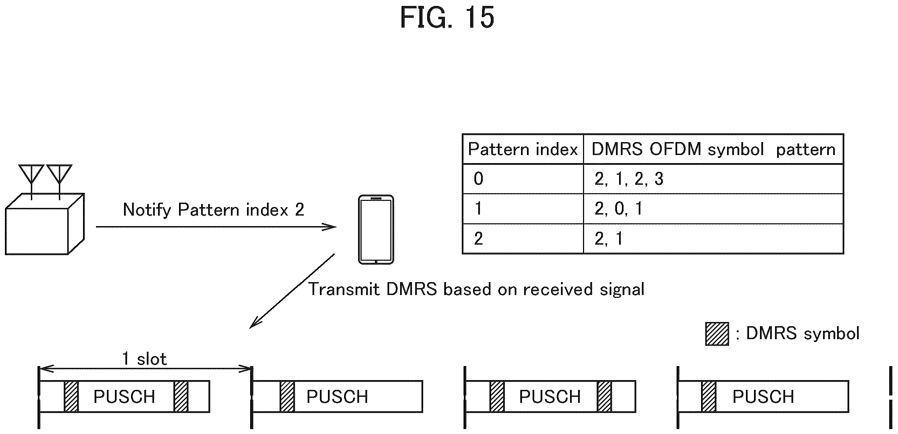

   Fig. 15 is a diagram showing an arrangement example (part 3) of the PUSCH DMRS used for joint channel estimation for operation example 2-1(Alt 2).
[Fig. 16]

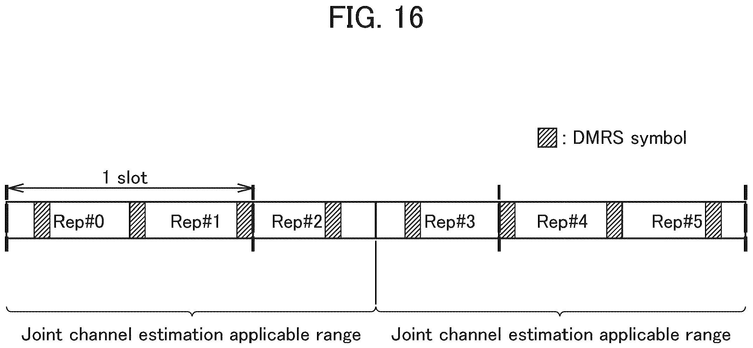

   Fig. 16 is a diagram showing an example of the arrangement of the DMRS used for joint channel estimation for operation example 2-2 (Opt 3).
[Fig. 17]

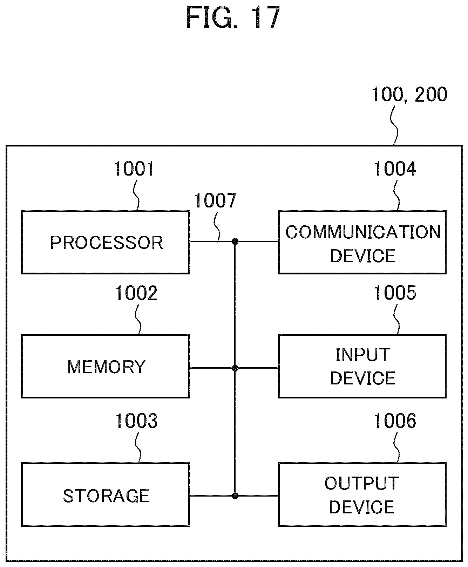

   Fig. 17 shows an example of the hardware configuration of the gNB100 and UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

Fig. 1 is an overall schematic diagram of a radio communication system 10 according to the present embodiment. The radio communication system 10 is a radio communication system according to 5G New Radio(NR) and includes a Next Generation-Radio Access Network 20 (NG-RAN 20, and a terminal 200 (User Equipment 200, below, UE200).

The radio communication system 10 may be a radio communication system according to a scheme called Beyond 5G, 5G Evolution or 6G.

The NG-RAN20 includes a radio base station 100 (Below: gNB100). The specific configuration of the radio communication system 10 including the number of gNBs and UEs is not limited to the example shown in Fig. 1.

The NG-RAN20 actually includes multiple NG-RAN nodes, specifically, gNBs (or ng-eNBs), and is connected to a core network (5GC, not shown) according to 5G. Note that the NG-RAN20 and 5GCs may simply be described as a network.

The gNB100 is a radio base station in accordance with NR and performs radio communication in accordance with the UE200 and NR. By controlling radio signals transmitted from multiple antenna elements, the gNB100 and UE200 can support Massive MIMO for generating more directional beams, carrier aggregation (CA) for bundling multiple component carriers (CCs), and dual connectivity (DC) for simultaneously communicating between the UE and each of the multiple NG-RAN nodes.

The radio communication system 10 corresponds to FR1 and FR2. The frequency bands of each FR(Frequency Range) are as follows:

▪FR1: 410 MHz to 7.125 GHz
▪FR2: 24.25 GHz to 52.6 GHz

FR1 uses sub-carrier spacing (SCS) of 15, 30 or 60 kHz and may use a bandwidth (BW) of 5~100 MHz. FR2 is a higher frequency than FR1, uses SCS of 60 or 120 kHz(240 kHz may be included) and may use a bandwidth (BW) of 50~400 MHz.

In addition, the radio communication system 10 may support a higher frequency band than that of FR2. Specifically, radio communication system 10 may support frequency bands above 52.6 GHz and up to 114.25 GHz.

Cyclic Prefix-Orthologous Frequency Division Multiplexing(CP-OFDM)/Discrete Fourier Transform-Spread (DFT-S-OFDM) with larger Sub-Carrier Spacing (SCS) may also be applied. In addition, DFT-S-OFDM may be applied to the downlink (DL) as well as the uplink (UL).

Fig. 2 shows an example configuration of the radio frame, subframe and slot used in radio communication system 10.

As shown in Fig. 2, one slot consists of 14 symbols, and the larger (wider) the SCS, the shorter the symbol period (and slot period). The number of symbols constituting one slot need not necessarily be 14 symbols (For example, 28, 56 symbols). In addition, the number of slots per subframe may vary depending on the SCS. In addition, the SCS may be wider than 240 kHz (For example, as shown in Fig. 2, 480 kHz, 960 kHz).

Note that the time direction (t) shown in Fig. 2 may be referred to as a time region, a time domain, a symbol period or a symbol time. The frequency direction may also be referred to as a frequency region, a frequency domain, a resource block, a resource block group, a subcarrier, a BWP (band width part), a subchannel, a common frequency resource, etc.

The radio communication system 10 can support Coverage Enhancement (CE) to extend the coverage of the cells (or even physical channels) formed by the gNB100. The coverage enhancement may provide a mechanism to increase the reception success rate of the various physical channels.

For example, the gNB100 can support repeated PDSCH(Physical Downlink Shared Channel) transmissions, and the UE200 can support repeated PUSCH(Physical Uplink Shared Channel) transmissions.

On the radio communication system 10, a Slot Configuration pattern for time division duplex (TDD) may be set. For example, DDDSU (D: Downlink (DL) symbol, S: DL/Uplink (UL) or Guard symbol, U: UL symbol) may be specified (see 3GPP TS38.101-4).

"D" indicates a slot containing all DL symbols, and "S" indicates a slot containing a mixture of DL, UL, and guard symbols (G). "U" indicates a slot containing all UL symbols.

While the radio communication system 10 can perform channel estimation of PUSCH (or PUCCH(Physical Uplink Control Channel)) using a demodulation reference signal (DMRS) for each slot, it can also perform channel estimation of PUSCH (or PUCCH) using DMRS assigned to each of multiple slots. Such channel estimation may be called joint channel estimation. Alternatively, it may be called a different name, such as cross-slot channel estimation.

The UE200 can transmit a multi-slot allocated (straddled) DMRS so that the gNB100 can perform joint channel estimation using the DMRS.

Also, in radio communication system 10, for coverage enhancement, TB processing over multi-slot PUSCH(TBoMS) which processes transport blocks (TBs) via PUSCH allocated to multiple slots may be applied.

In TBoMS, the number of symbols allocated may be the same in each slot, as in Time Domain Resource Allocation (TDRA) of PUSCH's Repetition type A (more on that later), or the number of symbols allocated to each slot may be different, as in TDRA of PUSCH's Repetition type B (more on that later).

TDRA may be interpreted as resource allocation in the time domain of PUSCH as specified in 3GPP TS38.214. TDRA of PUSCH may be interpreted as specified by the Information Element (IE) of the Radio Resource Control Layer (RRC), specifically PDSCH-Config or PDSCH-ConfigCommon.

TDRA may also be interpreted as resource allocation in the time domain of PUSCH specified by Downlink Control Information (DCI) .

### (2)Function block configuration of radio communication system

Next, the functional block configuration of the radio communication system 10 will be described. Specifically, the functional block configuration of the UE200 will be described. Fig. 3 is a functional block configuration diagram of the gNB100 and the UE200.

As shown in Fig. 3, the UE200 comprises a radio signal transmission and reception unit 210, an amplifier unit 220, a modulation and demodulation unit 230, a control signal and reference signal processing unit 240, an encoding/decoding unit 250, a data transmission and reception unit 260 and a control unit 270.

Note that only the main functional blocks related to the description of the embodiment are shown in Fig. 3, and the UE200(gNB100) has other functional blocks (For example, the power supply). Also, Fig. 3 shows the functional block configuration of the UE200, and see Fig. 17 for the hardware configuration.

The radio signal transmission and reception unit 210 transmits and receives radio signals in accordance with NR. By controlling radio (RF) signals transmitted from multiple antenna elements, the radio signal transmission and reception unit 210 can support Massive MIMO for generating more directional beams, Carrier Aggregation (CA) for bundling multiple component carriers (CCs), and Dual Connectivity (DC) for simultaneously communicating between a UE and each of two NG-RAN nodes.

The radio signal transmission and reception unit 210 may also transmit a physical uplink shared channel. In this embodiment, the radio signal transmission and reception unit 210 may constitute a transmission unit.

Specifically, the radio signal transmission and reception unit 210 may transmit PUSCH toward the network (gNB100). The radio signal transmission and reception unit 210 may support repetition of PUSCH.

Multiple types of repetitive transmission of PUSCH may be specified. Specifically, Repetition type A and Repetition type B may be specified. Repetition type A may be interpreted as a form in which a PUSCH allocated in a slot is repeatedly transmitted. That is, a PUSCH is less than or equal to 14 symbols and may not be allocated across multiple slots (adjacent slots).

On the other hand, a repetition type B may be interpreted as a repeated transmission of a PUSCH that may be allocated more than 15 symbols. In this embodiment, it may be permitted to allocate such a PUSCH across multiple slots.

In addition, the radio signal transmission and reception unit 210 may repeatedly transmit an uplink channel (UL channel) in a specific period of more than one slot. The uplink channel may include a physical uplink shared channel (PUSCH) and a physical uplink control channel (PUCCH). The shared channel may be referred to as a data channel.

A specific period of more than one slot may be interpreted as a period for a PUSCH (or PUCCH) repetition. For example, a specific period may be indicated by the number of Repetitions or it may be the time when a specified number of Repetitions are performed.

Alternatively, the radio signal transmission and reception unit 210 may repeatedly transmit the UL channel a specific number of times. Specifically, the radio signal transmission and reception unit 210 may repeatedly transmit PUSCH (or PUCCH) a multiple number of times.

The specific time period and/or the specific number of times may be indicated by signaling from the network (It may be a higher layer of RRC or a lower layer such as DCI.) or may be preset in the UE200.

The amplifier unit 220 is configured by PA (Power Amplifier)/LNA (Low Noise Amplifier), etc. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting and resource block allocation for each predetermined communication destination (such as the gNB 100). On the modulation and demodulation unit 230, Cyclic Prefix-Orthologous Frequency Division Multiplexing(CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing for various control signals transmitted and received by the UE200 and processing for various reference signals transmitted and received by the UE200.

Specifically, the control signal and reference signal processing unit 240 receives various control signals transmitted from the gNB100 via a predetermined control channel, such as control signals of a radio resource control layer (RRC). The control signal and reference signal processing unit 240 also transmits various control signals to the gNB100 via a predetermined control channel.

The control signal and reference signal processing unit 240 performs processing using a reference signal (RS) such as a Demodulation Reference Signal (DMRS) and a Phase Tracking Reference Signal (PTRS).

DMRS is a known reference signal (pilot signal) between individual base stations and terminals for estimating a fading channel used for data demodulation. PTRS is a reference signal for individual terminals for estimating phase noise, which is a problem in high frequency bands.

In addition to DMRS and PTRS, the reference signal may include a Channel State Information-Reference Signal(CSI-RS), a Sounding Reference Signal (SRS), and a Positioning Reference Signal (PRS) for location information.

The channel also includes a control channel and a data channel. Control channels may include PDCCH(Physical Downlink Control Channel), PUCCH(Physical Uplink Control Channel), RACH (Downlink Control Information (DCI) including Random Access Channel, Random Access Radio Network Temporary Identifier(RA-RNTI)), and Physical Broadcast Channel (PBCH).

Data channels may also include PDSCH(Physical Downlink Shared Channel), and PUSCH(Physical Uplink Shared Channel). Data may mean data transmitted through a data channel.

The control signal and reference signal processing unit 240 may also transmit to the network the capability information of the UE200 regarding the assignment of a physical uplink shared channel (PUSCH). In this embodiment, control signal and reference signal processing unit 240 may configure a transmission unit to transmit the capability information.

Specifically, the control signal and reference signal processing unit 240 may transmit UE Capability Information about the assignment of PUSCH (which may include Repetition) to the gNB100. Details of UE Capability Information will be described later.

The encoding/decoding unit 250 performs data division/concatenation and channel coding/decoding for each predetermined communication destination (gNB100 or other gNB).

Specifically, the encoding/decoding unit 250 divides the data output from the data transmission and reception unit 260 into predetermined sizes and performs channel coding on the divided data. The encoding/decoding unit 250 also decodes the data output from the modulation and demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in multiple layers (Media access control layer (MAC), radio link control layer (RLC), and packet data convergence protocol layer (PDCP), etc.). data transmission and reception unit 260 also performs error correction and retransmission control of data based on a hybrid automatic repeat request (ARQ).

The control unit 270 controls each functional block that makes up the UE200. Specifically, in this embodiment, the control unit 270 controls transmission of the UL channel, specifically, PUSCH and PUCCH.

Specifically, the control unit 270 can make the UL channel hop in the frequency direction in units of specific periods of more than one slot. Hopping in the frequency direction of the UL channel may be referred to as frequency hopping, and frequency hopping in units of specific periods of more than one slot may be referred to as inter-slot frequency hopping. It should be noted that hopping may mean that the frequency resources used change. In short, it may mean that subcarriers, resource blocks, resource block groups or BWPs change.

Also, the control unit 270 may cause the UL channel to hop in the frequency direction in units of a specific number indicating the number of repeated transmissions of the UL channel. Specifically, the control unit 270 may perform frequency hopping in units of the number of repeated transmissions (the number of Repetitions) of a specified UL channel, in other words, for every prescribed number of Repetitions.

If the joint channel estimation in gNB100 is applied and the transmission of UL channels (PUSCH and PUCCH) is overlapped (may be described as a collision), the control unit 270 may determine the frequency hopping pattern using allocable resources avoiding duplication at the time of resource allocation (which may be described as a repetition of the UL channel), specifically at the time of DCI reception.

Alternatively, if the transmission of UL channels (PUSCH and PUCCH) is overlapped, the control unit 270 may determine the hopping pattern using allocable resources avoiding duplication at the time of the first Repetition of the UL channel, specifically at the time of transmission of the first Repetition.

The control unit 270 may also set the hopping pattern for the UL channel Repetition as described above based on signaling from the network.

The control unit 270 may determine the allocation of DMRS transmitted on the UL channel, specifically PUSCH, based on the state of the PUSCH repetition, that is, the number of Repetitions, the Repetition period, etc.

Specifically, the control unit 270 may transmit the same symbol for DMRS (OFDM symbol) for each prescribed number of Repetitions. The control unit 270 may also set symbols (OFDM symbols) for the DMRS to be used for each of the prescribed number of Repetitions.

Moreover, the functions related to transmission/reception and control of the DMRS described above may also be provided in the gNB100. For example, the gNB100 (radio signal transmission and reception unit 210) may constitute a reception unit that receives a UL channel that is repeatedly transmitted from the UE200 within a specified period of time. The radio signal transmission and reception unit 210 of the gNB100 may receive a hopped UL channel in the frequency direction in units of the specified period of time.

The gNB100 (radio signal transmission and reception unit 210) may also receive a specified number of repeated transmissions from the UE200, that is, a UL channel (For example, PUSCH) on which a repetition is performed. In this case, the gNB100 (radio signal transmission and reception unit 210) may receive a UL channel hopped in the frequency direction in units of the specified number of times.

The gNB100 (control unit 270) may use the DMRS assigned to the multiple slots to construct a UL channel assigned to the multiple slots, for example, a control unit that performs joint channel estimation of PUSCH.

The gNB100 (control unit 270) may perform joint channel estimation of UL channels (For example, PUSCH) assigned to the multiple slots using the DMRS assigned to the multiple slots.

The gNB100 (control unit 270) may also perform initial access of the UE200, specifically, joint channel estimation of UL channels in a random access procedure, using the DMRS assigned to the multiple slots.

### (3)Operation of radio communication system

Next, the operation of radio communication system 10 will be described. Specifically, the operation related to channel estimation of the uplink channel for the purpose of coverage performance will be described.

### (3.1) Assumptions

As mentioned above, joint channel estimation may be interpreted as a technique that performs channel estimation based on (allocated) DMRS that exist in multiple slots.

Fig. 4 shows an example of the arrangement of DMRS used for joint channel estimation (part 1). The UE200 may transmit DMRS symbols between specific PUSCHs, PUCCHs, or between PUSCH and PUCCH so that the gNB100 can perform joint channel estimation.

For example, the UE200 may transmit DMRS symbols such that the transmission power and phase do not vary between slots.

Fig. 5 shows an example of the arrangement of DMRS used for joint channel estimation (part 2). The UE200 may determine the resources used for DMRS transmission by any of the following methods:

▪(Option (Opt) 1) when using separate DMRS deployments DMRS may be deployed in the DMRS resources allocated to each PUSCH before it is integrated.
▪(Opt 2): Joint channel estimation determines resources for DMRS to match the resources to which they apply

As shown in Fig. 5, DMRS may be transmitted (arranged) at equal intervals within the resources to which multi-slot channel estimation is applied.

### (3.2) Overview of operation

The following operation examples are described.

▪(Operation example 1): frequency hopping considering joint channel estimation
   ▪(Example 1-1): frequency hopping(Type A repetition like TDRA and PUCCH)
   ▪(Example 1-2): frequency hopping(Type B repetition like TDRA)
   ▪(Example 1-3): hopping pattern when dropping a repetition resource
   ▪(Example 1-4): How to determine the behavior of frequency hopping
      ▪(Example 1-4-1): How to notify PUSCH Repetition frequency hopping
      ▪(Example 1-4-2): How to notify PUCCH Repetition frequency hopping
   ▪(Example 2): DMRS optimization
      ▪(Example 2-1): DMRS granularity optimization
      ▪(Example 2-2): DMRS position optimization
   ▪(Example 3): Application to Msg3PUSCH
      ▪(Example 3-1): Joint channel estimation applicability in Msg3
   ▪(Example 4): UE capability notification

### (3.3) Example 1

### (3.3.1) Example 1-1

In this example, the operation related to frequency hopping(Type A repetition like TDRA and PUCCH) is described.

The UE200 may determine the hopping pattern of the UL channel from the following hopping patterns specified by the network (radio base station) or according to a predetermined rule (setting). The UL channel may mean either PUSCH or PUCCH (hereinafter the same). Also, the UL channel may include a repeated PUSCH or PUCCH.

Specifically, if the UE200 applies Type A repetition-like TDRA or uses PUCCH, it may determine one of the following hopping patterns:

▪(Opt 1): frequency hopping per slot
▪(Opt 2): frequency hopping within a slot
▪(Opt 3): frequency hopping only once within a Repetition transmission
   ▪(Opt 3-1): computing a unique hop duration based on the number of Repetition transmissions

In this case, frequency hopping may be avoided based on the number of Repetition transmissions on the UL channel. Also, the number of Repetitions may be the actual number of Repetitions to be allocated or the number of Repetitions before dropping the Repetition resource. It should be noted that the dropping of a Repetition resource may be interpreted as a resource (a time resource and/or a frequency resource) that is not allocated due to a conflict (duplication of allocation) between the Repetition resource and another UL or DL channel resource.

For example, the hop duration may be determined by first hopping duration = floor (number of Repetitions/2) or ceil (number of Repetitions/2).

▪(Opt 3-2): Informs slot position for frequency hopping

For example, the UE200 may inform the network of duration per hop = X number of slots (X number of repetitions), send X repetitions (X repetitions sent, same below) and then frequency hopping. Alternatively, the network may make the notification to the UE200 and the UE200 may operate on the basis of the notification (hereinafter the same).

Also, the number of slots may be the number of slots actually allocated by the Repetition or the number of slots before dropping the Repetition resource.

Fig. 6 shows an example of UL channel Repetition in operation example 1-1(Opt 3). As shown in Fig. 6, the hop period may be determined as floor(Repetition (Rep) number (6)/2)=3. In Fig. 6, each frame in the time (t) direction may be interpreted as corresponding to a slot (However, symbols may also be used).

The hop duration may be expressed in terms such as duration hop, hopping duration or duration per hop, and may be indicated by a time length or the number of repetitions.

▪(Opt 4): frequency hopping per X slot
   ▪(Opt 4-1): duration per hop reported by the network

For example, duration per hop = number of X slots, and frequency hopping may be performed for each X slot.

▪(Opt 4-2): Determine the hopping pattern based on the number of slots (which may be the number of symbols) to which joint channel estimation is applied.

For example, if the time window size is three slots, frequency hopping may be performed every third slot. The time window size may be a time domain to which joint channel estimation is applicable, and may be in units of slots or other time domains such as symbols (the same shall apply hereafter).

▪(Opt 4-3): Determine duration per hop based on number of repeated transmissions
▪(Opt 4-4): Determine hopping pattern based on number of repeated transmissions and number of slots (may be number of symbols) to which joint channel estimation is applied

Fig. 7 shows an example of UL channel Repetition in operation example 1-1 (Opt 4). As shown in Fig. 7, frequency hopping (X=2) may be performed every two slots.

### (3.3.2) Example 1-2

In this example, an operation related to frequency hopping(Type B repetition like TDRA) is described.

From the following hopping patterns, the UE200 may determine the hopping pattern of the UL channel as specified by the network (radio base station) or according to a predetermined rule.

Specifically, the UE200 may determine one of the following hopping patterns when Type B repetition-like TDRA is applied.

▪(Opt 1): frequency hopping per slot
▪(Opt 2): frequency hopping per Repetition
▪(Opt 3): frequency hopping only once in a Repetition transmission
▪(Opt 4): frequency hopping per X slot

Fig. 8 shows an example of UL channel Repetition in operation example 1-2 (Opt 3, 4). Specifically, the upper side of Fig. 8 shows an example of the UL channel's Repetition pertaining to Opt 3, and the lower side of Fig. 8 shows an example of the UL channel's Repetition pertaining to Opt 4.

As shown in Fig. 8, the hop period may be determined as floor (number of Repetitions (10)/2)=5, or frequency hopping(X = 2) every two slots. Also, as shown in Fig. 8, in the case of Type B repetition-like TDRA, multiple Repetitions (Rep) may be repeated in a slot, or multiple Repetitions may be assigned in the same slot.

▪(Opt 5): frequency hopping for each X Repetition
   ▪(Opt 5-1): duration per hop reported by the network

For example, the UE200 may report duration per hop = X number of repetitions and frequency hopping per X repetitions.

▪(Opt 5-2): Determine the hopping pattern based on the number of slots (which may be the number of symbols) to which the joint channel estimation is applied.

For example, if the time window size is three slots, frequency hopping may be performed every third slot.

Fig. 9 shows an example of UL channel Repetition in operation example 1-2 (Opt 5). As shown in Fig. 9, frequency hopping may be performed every three slots. Also, as shown in Fig. 9, the timing of hopping may be in the slot (in the middle), not at the slot boundary.

### (3.3.3) Example 1-3

In this example, the operation related to the hopping pattern at the time of dropping the Repetition resource is described. Fig. 10 shows an example of UL channel Repetition in operation example 1-3 (Alt 1, 2).

A UE200 may apply one of the following hopping patterns when joint channel estimation is applied (on the radio base station side) and the Repetition resource of the UL channel (For example, PUSCH) collides (may be called overlap) with a different resource (For example, resources for PUCCH).

▪(Alt 1): Apply hopping pattern without considering resource collisions

In this case, the hopping pattern may be applied on a per-slot basis without considering when resources are dropped. For example, if a second Repetition resource is dropped, a similar hopping pattern may be maintained (refer to upper side in Fig. 10, dotted line indicates dropped Repetition resource).

▪(Alt 2): apply hopping pattern based on the actual resource being sent

In this case, a hopping pattern may be applied based on the resource used to send each Repetition. For example, if a second Repetition resource is dropped, the hopping pattern may be applied except for the dropped resource (Lower reference in Fig. 10, resources in the frequency direction after slot #3 are different from Alt. 1 because the dropped Repetition resource (dotted line) is removed).

Note that Alt 1 and Alt 2 may be set separately when the hopping pattern described below is applied or when the number of repeated transmissions is specified based on the number of resources that can be allocated.

Fig. 11 shows an example of the UL channel Repetition in operation example 1-3 (Alt 3, 4).

▪(Alt 3): When allocating resources, the hopping pattern is applied based on the available Repetition resources

In this case, the available resources may be determined according to the conflict reason. For example, symbols of TDD pattern, SS/PBCH block (Synchronization Signal/Physical Broadcast Channel blocks) may be considered, but conflicts with repeated SFI (Slot Format Indication)/CI (Cancel Indication)/PUCCH transmissions may not. Alternatively, drops of a repetition resource for which the radio base station (gNB100) is known may be considered, but drops that the radio base station is unable to determine may not.

▪(Alt 4): When sending the first Repetition, the hopping pattern is applied to the allocatable Repetition resource

In this case, the allocable resources may be determined according to the time conflict reason. As with Alt 3, for example, symbols in the TDD pattern, SS/PBCH block may be considered, but collisions with repeated SFI/CI/PUCCH transmissions may not. Alternatively, drops in the Repetition resource for which the radio base station is known may be considered, but drops that the radio base station is unable to determine may not.

### (3.3.4) Example 1-4

In this example of operation, the method for determining the behavior of frequency hopping, specifically, the method for notifying PUSCH Repetition frequency hopping, and the method for notifying PUCCH Repetition frequency hopping are described.

For the notification of PUSCH Repetition frequency hopping, the UE200 may operate as follows:

For example, the UE200 may determine the following behavior during frequency hopping:

▪hopping pattern to select
▪Behavior if drops occur when applying frequency hopping The higher layer (For example, RRC,) signaling may be used to determine such behavior, or it may be in accordance with predetermined rules (settings).

The UE200 may also set the hopping pattern by any of the following methods:
▪Configuring the number of slots to which the joint channel estimation is applied and the hop duration parameter separately or in common
▪Configuring separate or in common parameters for Type A like repetition TDRA and Type B like repetition TDRA
▪Configuring separate or in common parameters for Type B like repetition TDRA hop duration for number of slots and number of repetitions

In addition, the UE200 may apply any of the following methods when configuring the hopping pattern:

▪(Alt 1): Set separate hopping patterns with and without joint channel estimation
▪(Alt 2): Set a common hopping pattern with and without joint channel estimation

### (3.3.4.1) Example 1-4-1

In this example of operation, the UE200 may determine the behavior during the aforementioned frequency hopping based on the following information with respect to PUSCH Repetitionfrequency hopping.

▪(Opt 1): DCI
   ▪(Opt 1-1): Explicit frequency hopping related information by field of DCI

In this case, the association (mapping) of frequency hopping-related information with the DCI field may use higher layer signaling or follow a predetermined rule (setting).

▪(Opt 1-2): In the higher layer, information elements of frequency hopping-related information are added to the TDRA table and determined by the DCI
▪(Opt 1-3): Implicit frequency hopping-related information by fields of the DCI

For example, frequency hopping-related information may be associated with fields of the DCI. Alternatively, frequency hopping-related information may be associated with the Control channel element (CCE) index where the DCI for resource allocation is located.

▪(Opt 2): MAC CE (Control Element)
▪(Opt 3): Higher layer signal

For example, a hopping pattern may be selected based on the frequency hopping-related information received in the RRC.

▪(Opt 4): Determine hopping pattern based on given rules

For example, in the case of channel estimation using multiple slots, any option of the hopping pattern may be specified.

### (3.3.4.2) Example 1-4-2

In this example of operation, the UE200 may determine the behavior during the aforementioned frequency hopping based on the following information with respect to PUCCH Repetitionfrequency hopping.

▪(Opt 1): DCI
   ▪(Opt 1-1): Explicit frequency hopping related information by field of DCI
   ▪(Opt 1-2): In the higher layer, information element of frequency hopping related information is added to PUCCH resource and determined by DCI
   ▪(Opt 1-3): Implicit frequency hopping related information by field of DCI

For example, the PUCCH resource indicator may be associated with frequency hopping related information. Alternatively, the frequency hopping related information may be associated with the CCE index where the DCI for resource allocation is located. In this case, the association method may be a notification by higher layer signaling or determined by prescribed rules.

▪(Opt 2): MAC CE (Control Element)
▪(Opt 3): Higher layer signal
▪(Opt 4): Based on predetermined rules, determine the hopping pattern

For example, in the case of channel estimation using multiple slots, any option of the hopping pattern may be specified.

### (3.4) Example 2

In this example, the operation related to optimization of DMRS is described.

The UE200 may determine the resources to be used for DMRS transmission based on one of the following methods:

▪(Opt 1): Determine the time resources of the DMRS according to the existing method specified in the 3GPP specification
▪(Opt 2): Determine the time resources of the DMRS according to the resources to which the joint channel estimation applies
   ▪(Opt 2-1): Determine the number of OFDM rides of the DMRS for each resource and determine the DMRS time resources (locations) according to existing methods
      ▪(Opt 2-1-1): Determine the number of OFDM symbols to transmit the DMRS for each slot
      ▪(Opt 2-1-2): Determine the number of OFDM symbols to transmit the DMRS for each Repetition
   ▪(Opt 2-2): Determine the number of OFDM symbols to send DMRS according to existing methods and determine OFDM symbol positions for DMRS to match the resources to which joint channel estimation is applied
   ▪(Opt 2-3): Determine the number of OFDM symbols to send DMRS/OFDM symbol positions to match the resources to which joint channel estimation is applied

Note that the above operation may be applied to at least one of Type A repetition-like TDRA (Below, Type A) and Type B repetition-like TDRA(Type B). DMRS Optimization may be set separately for Type A and Type B or set in common. DMRS Optimization may be set separately for PUSCH and PUCCH or set in common.

### (3.4.1) Example 2-1

In this example, the operation related to the optimization of DMRS granularity is described.

The UE200 may determine the number of OFDM symbols to be used for DMRS during repeated transmission based on any of the following methods. Note that this method may be applied when the same number of OFDM symbols for DMRS is transmitted for every X repetitions.

▪(Alt 1): Decide whether to transmit (or not) DMRS for every X repetitions
▪(Alt 2): Decide how many DMRS OFDM symbols to use for every X repetitions

In this case, the value of X may be any number from "1" to the total number of repeat transmissions. Repetition may be read as a slot (hereafter the same).

Fig. 12 shows an example (part 1) of the arrangement of PUSCH DMRS used for joint channel estimation for operation example 2-1 (Alt 1, 2). As shown in Fig. 12, the number of DMRS OFDM symbols may be determined (Alt 1) for each PUSCH Repetition, or the number of DMRS OFDM symbols may be determined (Alt 2) for each PUSCH Repetition (unit).

In the case of Alt 1, the UE200 may also decide, based on a given rule, DCI, MAC CE or RRC, whether to set a Repetition that does not send DMRS. In this case, the presence or absence of DMRS transmission during PUSCH transmission may be determined as follows.

▪The presence or absence of the use of the above configurations in the RRC is indicated by an added parameter of ENUMERATED (enabled).
▪The factor determining the presence or absence of the use of the above configurations in the TDRA table is added.

In addition, the presence or absence of DMRS transmission during PUCCH transmission may be determined as follows.

▪The presence or absence of the use of the configurations described above in the PUCCH resource of the RRC is indicated by an added parameter of ENUMERATED (enabled).

The UE200 may also decide, based on a given rule, DCI, MAC CE or RRC, at what repetitions to send (or not to send) the DMRS.

Fig. 13 shows an example of the arrangement of the PUCCH DMRS used for joint channel estimation for operation example 2-1(Alt 1). Specifically, Fig. 13 shows an example in which the DMRS is transmitted every two slots in the case of PUCCH Format 3, 4. PF3, 4 may be called a long format and have 4~14 symbols.

Also, in the case of Alt 2, the UE200 may decide for each iteration how many identical DMRS OFDM symbols are to be transmitted based on a given rule, higher layer signaling or DCI. In this case, the UE200 may operate as follows:

▪Set up multiple DMRS OFDM symbols separately and refer to each X repetition

For example, multiple DMRS Configurations may be set and the UE200 may be applied to each X repetition. For example, the number of DMRS OFDM symbols may be set for each (ordinal number of repeated transmissions) mod X = 0, 1, ..., (X-1).

▪Determine the number of DMRS OFDM symbols for each Repetition based on the ratio (or difference)

For example, the ratio of the number of DMRS OFDM symbols for each Repetition to the number of DMRS OFDM symbols set by the RRC may be determined.

Fig. 14 shows an example of PUSCH DMRS placement (unit 2) used for joint channel estimation for operation example 2-1(Alt 2). Specifically, Fig. 14 shows an example when the number of DMRS symbols is set to 2 and scaling = (1, 1/2).

▪Set multiple patterns for the number of DMRS OFDM symbols and select one pattern

Fig. 15 shows an arrangement example (part 3) of the PUSCH DMRS used for joint channel estimation for operation example 2-1(Alt 2) .

Specifically, Fig. 15 shows an example in which the UE200 determines the arrangement of the DMRS OFDM symbols in the PUSCH based on the pattern index (0,1,2) associated with the pattern of the number of DMRS OFDM symbols notified from the network (gNB100). More specifically, Fig. 15 shows an example in which the Pattern index 2 is notified and the DMRS OFDM symbols are sequentially arranged in slots, 2 and 1.

### (3.4.2) Example 2-2

In this example of operation, the operation related to the optimization of the DMRS position will be described.

The UE200 may determine the OFDM symbol position for the DMRS when applying joint channel estimation based on either of the following methods:
▪(Opt 1): Determine DMRS OFDM symbol position based on resources of multiple Repetitions

For example, DMRS may be transmitted evenly within resources of all Repetitions.

▪(Opt 2): DMRS OFDM symbol position determined based on resources in multiple slots

For example, DMRS may be transmitted evenly in two slots.

▪(Opt 3): Joint channel estimation determines DMRS OFDM symbol position based on the resource to which it is applied
▪(Opt 4): Determination of DMRS OFDM symbol at each Repetition transmission according to the existing method specified in the 3GPP specification

In this case, the other operation examples described above may be combined. The UE200 may also determine DMRS OFDM symbol locations based on predetermined rules, higher layer signaling or DCI.

Fig. 16 shows an example of DMRS placement used for joint channel estimation for operation example 2-2(Opt 3). As shown in Fig. 16, similar DMRS OFDM symbol positions may be assigned depending on the range (Rep #0~2, Rep #3~5) to which joint channel estimation is applied.

### (3.5) Example 3

In this example, the operation related to the application to Msg3PUSCH is described.

The UE200 may receive the relevant information of Joint channel estimation for Msg3 initial transmission based on any of the following methods or combinations: In this case, the configurations for Joint channel estimation may vary depending on the frequency (band) used by the UE.

▪Notification to UE200 via higher layer signaling

For example, PUSCH-ConfigCommon IE (Information Element) or RACH-ConfigCommon IE specified in the RRC layer may be used. Msg3 is a message of a RACH(Random Access Channel) procedure, and PUSCH may be used to transmit Msg3.

Msg1 may also be transmitted via PRACH(Physical Random Access Channel). Msg1 may be referred to as PRACH Preamble. Msg2 may be transmitted via PDSCH. Msg2 may be referred to as RAR(Random Access Response). Msg3 may be referred to as RRC Connection Request. Msg4 may be referred to as RRC Connection Setup.

▪Notification to UE200 through Msg2 RAR

Any of the following methods may apply:

▪(Alt 1): Enhanced UE is notified by sending a RAR with a MAC configuration different from the normal UE

Enhanced UE may mean a UE that supports joint channel estimation.

▪(Alt 2): TDRA notification for UL grant (permit)

For example, an information element for channel estimation across multiple slots may be added to the TDRA table set in the RRC, and the information may be selected by the DCI.

▪(Alt 3): Implicitly notify with UL grant information

For example, it may be tied to a TPC (Transmit Power Control) command or MCS(Modulation and Coding Scheme). In this case, the tie method may be set by a predetermined rule or network (radio base station).

▪(Alt 4): Notification using reserved bits

In addition, higher layer signaling notifications may add joint channel estimation-related information to the PUSCH-ConfigCommon information element TDRA table.

Alternatively, in notifications through DCI format 0_0 with CRC scrambled by TC-RNTI (Temporary C (Cell)-RNTI), either of the following may apply:

▪(Alt 1): Implicitly notifies joint channel estimation related information according to the CCE index where the DCI is located
▪(Alt 2): Notifies joint channel estimation related information using reserved bits of HARQ process number, New data indicator
▪(Alt 3): Notifies implicitly by information notified by DCI For example, relevant information may be linked to TDRA, TPC command or MCS. In this case, the linking method may be set by a predetermined rule or network (radio base station).

Alternatively, RNTI for DCI with CRC scrambled by Enhanced UE may be used. RNTI for Enhanced UE may be allocated by RAR. Joint channel estimation-related information may also be notified by DCI for Enhanced UE.

### (3.5.1) Example 3-1

In this example, the operation related to the applicability of joint channel estimation in Msg3 is described.

The UE200 may report (inform) to the network (radio base station) whether or not to apply joint channel estimation when transmitting Msg3 based on any of the following methods.

▪(Opt 1): Report together with the applicability (or request) of repeated transmission of Msg3

When repeated transmission of Msg3 is performed, the applicability of joint channel estimation may be included.

▪(Opt 2): Report independently of applicability (or request) of repeated transmission of Msg3
   ▪(Opt 2 -1): Allocate different initial bandwidths depending on applicability (or request)
   ▪(Opt 2-2): use different RACH preambles depending on applicability (or requirement)
   ▪(Opt 2-3): use different RACH occurrences depending on applicability (or requirement)
   ▪(Opt 2-4): use a specific Orthogonal Cover Code (OCC) pattern in Msg1 sent repeatedly depending on applicability (or requirement)

### (3.6) Example 4

In this example, an operation related to notification of UE capability is described.

For joint channel estimation, the UE200 may report the following contents to the network as UE Capability Information. The targets may be PUSCH and PUCCH collectively or individually.

▪Maximum number of DMRS transmission slots that can run joint channel estimation
▪Maximum number of DMRS transmission Repetitions that can run joint channel estimation
▪Applicability of enhanced frequency hopping pattern ▪Applicability of each operation of DMRS optimization ▪Applicability of joint channel estimation to Msg3PUSCH

A UE200 may report the frequency it supports (which may be FR or band) by any of the following methods:

▪Whether or not all frequencies can be supported together (whether or not it can be supported as a mobile station)
▪Whether or not each frequency can be supported
▪Whether or not each FR1/FR2 can be supported
▪Whether to respond to each SCS

In addition, the UE200 may report the corresponding duplex by any of the following methods:

▪Whether or not the UE can respond
▪Whether or not each duplex (TDD/FDD) can be supported

### (4)Operational effects

According to the above embodiment, the following working effects can be obtained. Specifically, according to the UE200 (and gNB100) in the above operation example 1-4, channel estimation can be performed more efficiently when joint channel estimation of PUSCH (or PUCCH) using DMRS that can exist in multiple slots is applied.

In particular, according to the operation example described above, appropriate frequency hopping considering joint channel estimation, placement of DMRS, transmission of Msg3, and transmission of UE Capability Information can be realized.

### (5)Other Embodiments

Although the above description of the embodiment is not limited to the description of the said embodiment, it is obvious to those skilled in the art that various modifications and improvements are possible.

For example, in the above described embodiment, the reference signal for demodulation (DMRS) used for channel estimation of PUSCH (or PUCCH) is described, but if it is a reference signal used for channel estimation of a physical channel such as PUSCH (or PUCCH), it may be another reference signal.

Also, in the above description, set, activate, update, indicate, enable, specify and select may be read as each other. Similarly, link, associate, correspond, map may be read as each other, and allocate, assign, monitor and map may be read as each other.

In addition, specific, dedicated, UE-specific and UE-specific may be read as interchangeable. Similarly, common, shared, group-common, UE-common and UE-shared may be read as interchangeable.

In addition, the block diagram (Fig. 3) used for the explanation of the above described embodiment shows blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmitting unit (transmission unit) or transmitter. In either case, as described above, the implementation method is not particularly limited.

Furthermore, the above-mentioned gNB100 and UE200 (the device) may function as a computer for processing the radio communication method of the present disclosure. Fig. 17 shows an example of the hardware configuration of the device. As shown in Fig. 17, the device may be configured as a computer device including a processor 1001, a memory 1002, a storage 1003, an communication device 1004, an input device 1005, an output device 1006, a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 3) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 controls the entire computer by, for example, operating the operating system. The processor 1001 may consist of a central processing unit (CPU) including interfaces with peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. Memory 1002 may store programs (program code), software modules, etc., that are capable of executing a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. Bus 1007 may be configured using a single bus or different buses between devices.

In addition, the device may be configured including hardware such as a microprocessor, a digital signal processor (DSP), an application specific integrated circuit (ASIC), a programmable logic device (PLD), a field programmable gate array (FPGA), etc., with which some or all of each functional block may be implemented. For example, the processor 1001 may be implemented by using at least one of these hardware.

Also, the notification of information is not limited to the mode/embodiment described in this disclosure and may be made using other methods. For example, the notification of information may be carried out by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, e.g., an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (For example, drones, self-driving cars, etc.) or a robot (manned or unmanned). At least one of a base station and a mobile station can be a device that does not necessarily move during the communication operation. For example, at least one of a base station and a mobile station may be an Internet of Things (IoT) device such as a sensor.

In addition, the base station in this disclosure may be read as a mobile station (user terminal, hereinafter the same). For example, each mode/embodiment of this disclosure may be applied to a configuration in which communication between a base station and a mobile station is replaced with communication between multiple mobile stations (For example, it may be called Device-to-Device(D2D), Vehicle-to-Everything(V2X), etc.). In this case, the mobile station may have the function of the base station. In addition, words such as "up" and "down" may be replaced with words corresponding to communication between terminals (For example, "side"). For example, terms an uplink channel, a downlink channel, or the like may be read as a side channel.

Similarly, mobile stations in this disclosure may be replaced with base stations. In this case, the base station may have the function of the mobile station. A radio frame may be composed of one or more frames in the time domain. Each frame or frames in the time domain may be referred to as a subframe. A subframe may be further configured by one or more slots in the time domain. Subframes may have a fixed length of time (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in units of time larger than a minislot may be referred to as a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe (1 ms) in an existing LTE, may have a duration shorter than 1 ms (For example, 1-13 symbols), or may have a duration longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. In addition, the number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input device
1006 output device
1007 bus

## Claims

1. A terminal comprising:
a transmission unit that transmits an uplink channel repeatedly in a specified period of more than one slot; and
a control unit that controls transmission of the uplink channel, wherein
the control unit causes hopping the uplink channel in the frequency direction in units of the specified period.

2. A terminal comprising:
a transmission unit that repeatedly transmits an uplink channel a specified number of times; and
a control unit that controls transmission of the uplink channel, wherein
the control unit causes hopping the uplink channel in the frequency direction in units of the specified number of times.

3. The terminal according to claim 1 or 2, wherein the control unit determines allocation of a demodulation reference signal to be transmitted on the uplink channel based on a repetition state of the uplink channel.

4. A radio base station comprising:
a reception unit that receives an uplink channel that is repeatedly transmitted from a terminal within a specified period; and
a control unit that performs channel estimation of the uplink channel allocated to multiple slots using the demodulation reference signal allocated to the multiple slots, wherein
the reception unit receives the uplink channel hopped in the frequency direction in units of the specified period.

5. A radio base station comprising:
a reception unit that receives an uplink channel that is repeatedly transmitted from a terminal a specified number of times; and
a control unit that performs channel estimation of the uplink channel allocated to multiple slots using a demodulation reference signal allocated to the multiple slots, wherein
the reception unit receives the uplink channel hopped in the frequency direction in units of the specified number of times.

6. The radio base station according to claim 4 or 5, wherein the control unit performs channel estimation of the uplink channel in the initial access of the terminal using a demodulation reference signal allocated to multiple slots .
